# EUROPÄISCHE PATENTSCHRIFT

(11) **EP 3 251 469 B1**
(45) Veröffentlichungstag und Bekanntmachung des Hinweises auf die Patenterteilung: **07.04.2021**
(21) Anmeldenummer: 16701803.5
(22) Anmeldetag: 28.01.2016
(51) Int. Cl.: H05B 47/18

(54) **VERFAHREN ZUM BETREIBEN VON GERÄTEN IN EINEM BELEUCHTUNGSSYSTEM**
METHOD FOR OPERATING DEVICES IN A LIGHTING SYSTEM
PROCÉDÉ POUR FAIRE FONCTIONNER DES APPAREILS DANS UN SYSTÈME D'ÉCLAIRAGE

(30) Priorität: 28.01.2015 DE 102015201434
(43) Veröffentlichungstag der Anmeldung: 06.12.2017
(73) Patentinhaber: Zumtobel Lighting GmbH, 6850 Dornbirn (AT)
(72) Erfinder: RÜF, Karl-Heinz, 6850 Dornbirn (AT)
(74) Vertreter: Thun, Clemens
(86) Internationale Anmeldenummer: PCT/EP2016/051812
(87) Internationale Veröffentlichungsnummer: WO 2016/120388

(56) Entgegenhaltungen:
- EP-A1- 2 645 824
- DE-A1-102009 050 733
- DE-A1-102012 210 959
- DE-B3-102008 017 533
- US-A1- 2005 128 751
- US-A1- 2014 265 634

## Beschreibung

Die vorliegende Erfindung betrifft ein Verfahren zum Betreiben von Geräten in einem Beleuchtungssystem, welches einen sog. DALI-Bus aufweist. Ferner betrifft die vorliegende Erfindung eine so genannte Splitter-Einheit zur Verwendung in einem DALI-System sowie ein Beleuchtungssystem mit einem DALI-Bus und einer entsprechenden Splitter-Einheit.

Zum Ansteuern von Leuchten eines komplexeren Beleuchtungssystems hat sich in der Vergangenheit der sogenannte DALI (Digital Addressable Lighting Interface)-Standard etabliert. Es handelt sich um ein Kommunikationsprotokoll zur digitalen Ansteuerung insbesondere von Betriebsgeräten für Lichtquellen, das es ermöglicht, mehreren Geräten entweder gruppenweise oder individuell Befehle zu übermitteln, um z. B. die Lichtquellen innerhalb eines bestimmten Helligkeitsbereichs einzustellen bzw. zu dimmen. Dieser DALI-Standard ermöglicht dabei nicht nur das digitale Ansteuern der Geräte sondern erlaubt gleichzeitig auch, dass Lampenbetriebsgeräte an eine zentrale Steuereinheit Rückmeldungen bezüglich des Betriebszustands übermitteln, wodurch Defekte einzelner Geräte sehr einfach und schnell ermittelt werden können. Ferner können auch andere Geräte wie z. B. Sensoren oder dgl. in das System integriert werden.

Üblicherweise weist ein Beleuchtungssystem auf Basis des DALI-Standards eine Busleitung, den sogenannten DALI-Bus auf, an den alle Geräte angeschlossen sind. Bei diesem DALI-Bus handelt es sich um eine von der allgemeinen Stromversorgung getrennte Datenleitung, über welche den Geräten Befehle übermittelt werden Ein Beispiel eines DALI-Systems ist im EP 2 645 824 B1 offenbart.

Um die DALI-Funktionalität nutzen zu können, muss die Steuereinheit des Systems wissen, in welcher Weise sie die Verbraucher, insbesondere also die Leuchten bzw. deren Betriebsgeräte individuell kontaktieren kann. Hierzu ist vorgesehen, dass jeder Leuchte eine so genannte Betriebsadresse zugewiesen wird, wobei die Betriebsadresse dann während des späteren Betriebs in der Regel Bestandteil des von der Steuereinheit ausgegebenen DALI-Befehls ist. Lediglich so genannte Broadcast-Befehle, die also an alle Teilnehmer des Systems gerichtet sind, enthalten keine individuelle Adressinformation. Im DALI-Standard können innerhalb eines Bussystems maximal 64 Adressen vergeben werden.

Damit die einzelnen Leuchten eine Betriebsadresse erhalten und auch die Steuereinheit weiß, unter welcher Betriebsadresse die jeweilige Leuchte kontaktierbar ist, muss im Rahmen einer Initialisierung des Systems eine systematische Adressvergabe erfolgen. Hierfür sind aus dem Stand der Technik unterschiedliche Varianten eines Inbetriebnahmeverfahrens bekannt, wobei nahezu allen Varianten gemeinsam ist, dass die Leuchten zunächst eine individuelle, beispielsweise während der Herstellung vergebene Ursprungsadresse aufweisen, unter der sie sich identifizieren können. Nachdem diese Ursprungsadressen der zentralen Steuereinheit mitgeteilt wurden, fordert diese sukzessiv die einzelnen Leuchten dazu auf, sich zu identifizieren, was in der Regel durch eine vorbestimmte Art und Weise der Lichtabgabe erfolgt. Das heißt, die zugehörige Leuchte schaltet sich beispielsweise ein oder blinkt. Ein Benutzer des Systems muss dann feststellen, an welcher Stelle innerhalb eines Raums und/oder eines Gebäudes die entsprechende Leuchte positioniert ist und diese Information der Steuereinheit mitteilen. Diese übermittelt dann unter Zuhilfenahme der Ursprungsadresse der sich gerade identifizierenden Leuchte eine Betriebsadresse und kann dann während des späteren Betriebs die Leuchte unter dieser Betriebsadresse ansteuern. Dieser Vorgang wird solange wiederholt, bis sämtlichen Leuchten eine Adresse zugewiesen wurde.

Offensichtlich ist das zuvor geschilderte Verfahren zeitaufwändig, da nicht absehbar ist, welche Leuchte sich als nächstes identifizieren wird, und dementsprechend durchaus einige Zeit vergehen kann, bis die sich gerade identifizierende Leuchte entdeckt wird.

Der vorliegenden Erfindung liegt deshalb die Aufgabenstellung zugrunde, eine alternative Lösung anzubieten, mit der zumindest in speziellen Situationen der Aufwand zur Inbetriebnahme eines DALI-Systems reduziert werden kann, trotz allem jedoch die Möglichkeit besteht, die Leuchten in der bekannten Weise mit Hilfe von DALI-Befehlen anzusteuern.

Die Aufgabe wird durch eine so genannte Splitter-Einheit mit den Merkmalen des Anspruchs 1 sowie durch ein Verfahren gemäß Anspruch 8 gelöst. Vorteilhafte Weiterbildungen der Erfindung sind Gegenstand der abhängigen Ansprüche.

Gemäß der vorliegenden Erfindung wird ein neuartiges, in einem DALI-System zum Einsatz kommendes Gerät vorgeschlagen. Dieses als Splitter-Einheit bezeichnete Gerät weist einen eingangsseitigen Anschluss zur Verbindung mit einem DALI-Bus sowie mindestens zwei ausgangsseitige Anschlüsse auf. Das erfindungsgemäße Gerät ist wie bei DALI-Geräten üblich in der Lage, die eingangsseitigen, also über den DALI-Bus eintreffende Signale zu empfangen. Diese DALI-Befehle werden dann selektiv an die ausgangsseitigen Anschlüsse weitergeleitet, abhängig von den dem empfangenen DALI-Befehl zugeordneten Adressinformationen sowie nunmehr in Form von Broadcast-Befehlen. An die ausgangsseitigen Anschlüsse der erfindungsgemäßen Splitter-Einheit sind dann Verbraucher, in der Regel also Leuchten angeschlossen, welche diese Broadcast-Befehle empfangen und unmittelbar umsetzen.

Erfindungsgemäß wird deshalb eine Splitter-Einheit zur Verwendung in einem Beleuchtungssystem vorgeschlagen, welche einen eingangsseitigen Anschluss für die Verbindung mit einem DALI-Bus sowie mindestens zwei ausgangsseitige Anschlüsse aufweist, wobei die Splitter-Einheit dazu ausgebildet ist, über den eingangsseitigen Anschluss empfangende DALI-Befehle abhängig von der dem empfangenen DALI-Befehl zugeordneten Adressinformation den ausgangsseitigen Anschlüssen zuzuordnen und den entsprechenden DALI-Befehl als Broadcast-Befehl über den entsprechenden Ausgangsanschluss auszugeben.

Ferner wird ein Verfahren zum Betreiben von Geräten in einem Beleuchtungssystem, welches einen DALI-Bus aufweist, vorgeschlagen, wobei die Geräte dazu ausgebildet sind, entsprechend dem DALI-Standard zu kommunizieren, und wobei in einer an den DALI-Bus angeschlossenen Splitter-Einheit empfangene DALI-Befehle abhängig von der dem empfangenden DALI-Befehl zugeordneten Adressinformation einem ausgangsseitigen Anschluss der Splitter-Einheit zugeordnet und als Broadcast-Befehl über den entsprechenden ausgangsseitigen Anschluss an die daran angeschlossenen Geräte ausgegeben werden.

Vorzugsweise ist die Splitter-Einheit dazu ausgebildet, jedem ausgangsseitigen Anschluss jeweils genau eine DALI-Adresse zuzuordnen. Für den Fall, dass über den eingangsseitigen Anschluss Broadcast-Befehle empfangen werden, ist die Splitter-Einheit vorzugsweise dazu ausgebildet, diesen Broadcast-Befehl an alle ausgangsseitigen Anschlüsse auszugeben.

Auch die Splitter-Einheit belegt also Adressen des DALI-Systems, an welches die Splitter-Einheit mit ihrem eingangsseitigen Anschluss angeschlossen ist. Erfindungsgemäß übernimmt nunmehr allerdings die Splitter-Einheit die Funktion, zu entscheiden, ob die dem DALI-Befehl zugeordnete Adressinformation relevant - also für zumindest einen der Ausgangsanschlüsse bestimmt - ist und gibt dann den Befehl in entsprechender Weise an den Ausgangsanschluss weiter. Die Weiterleitung erfolgt nunmehr jedoch wie oben erwähnt als Broadcast-Befehl, also ohne individuelle Adressinformation. Die an den entsprechenden ausgangsseitigen Anschluss angeschlossenen Verbraucher werden also gleichartig betrieben, wobei sich insofern ein Vorteil ergibt, als keinem dieser Verbraucher mehr eine individuelle Betriebsadresse zugewiesen werden muss. Das heißt, es ist lediglich erforderlich, den bzw. die Verbraucher mit dem geeigneten Ausgangsanschluss der erfindungsgemäßen Splitter-Einheit zu verbinden, weitere Maßnahmen wie die Zuweisung einer bestimmten Betriebsadresse sind hingegen nicht mehr erforderlich.

Hierdurch kann der Aufwand bei der Inbetriebnahme eines DALI-Systems deutlich reduziert werden, wobei sich dieser Vorteil insbesondere dann auswirkt, wenn Verbraucher in immer wiederkehrenden Mustern bzw. Konfigurationen angeordnet sind und dementsprechend in einer entsprechend systematischen Weise mit Betriebsadressen versehen sein sollten. Diese Situation liegt beispielsweise in Hotels vor, bei denen in gleichartig ausgestalteten Hotelzimmern auch die entsprechenden Leuchten mehr oder weniger immer gleichartig angeordnet sind. Auch in Krankenhäusern oder ähnlichen Einrichtungen ergibt sich eine wiederkehrende Anordnung der Leuchten, sodass hier der Einsatz der erfindungsgemäßen Splitter-Einheit ebenfalls besondere Vorteile mit sich bringt.

Die bislang beschriebenen Maßnahmen betrafen insbesondere das Weiterleiten von DALI-Befehlen durch die Splitter-Einheit zu den Verbrauchern hin. In gleicher Weise kann allerdings gemäß einer vorteilhaften Weiterbildung auch eine Rückmeldung erfolgen, wobei hierzu die Splitter-Einheit dazu ausgebildet ist, an einem ausgangsseitigen Anschluss eintreffende DALI-Rückmeldungen über den eingangsseitigen Anschluss an das DALI-System weiterzuleiten und hierbei die weitergeleitete Rückmeldung mit der dem dementsprechenden ausgangsseitigen Anschluss zugeordneten DALI-Adresse zu versehen.

Wie bereits erwähnt belegt also die erfindungsgemäße Splitter-Einheit mehrere DALI-Adressen eines an den eingangsseitigen Anschluss anliegenden DALI-Systems. Hierbei ist vorzugsweise vorgesehen, dass an der Splitter-Einheit selbst Mittel vorgesehen sind, mit deren Hilfe wahlweise festgelegt werden kann, welche DALI-Adressen genutzt werden sollen. Dabei kann insbesondere ein manuelles Einstellen einer Startadresse vorgesehen sein, wobei diese Startadresse dem ersten ausgangsseitigen Anschluss zugeordnet wird und in logischer Weise die Splitter-Einheit den weiteren ausgangsseitigen Anschlüssen entsprechende aufeinanderfolgende DALI-Adressen zuordnet. Letztendlich muss also zur Inbetriebnahme des Systems lediglich der Splitter-Einheit eine gewünschte DALI-Startadresse zugewiesen werden und die Leuchten müssen mit den entsprechenden Ausgangsanschlüssen der Splitter-Einheit verbunden werden. Im Vergleich einer individuellen Vergabe von Betriebsadressen an alle einzelnen Leuchten stellt dies eine deutliche Reduzierung des Arbeitsaufwands dar.

Nachfolgend soll die Erfindung anhand der beiliegenden Zeichnungen näher erläutert werden. Es zeigen:
- Figur 1: die schematische Darstellung eines DALI-Systems, bei dem mehrere erfindungsgemäße Splitter-Einheiten zum Einsatz kommen;
- Figur 2: die Funktionsweise der erfindungsgemäßen Splitter-Einheit beim Weiterleiten von DALI-Befehlen und
- Figur 3: das Weiterleiten von Rückmeldungen durch die erfindungsgemäße Splitter-Einheit.

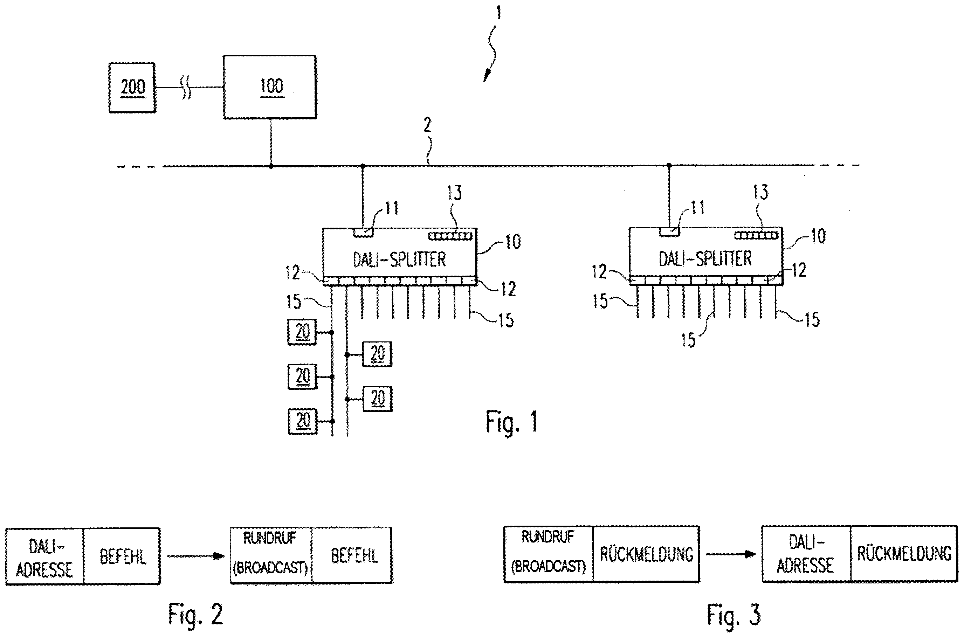

Figur 1 zeigt zunächst den Aufbau eines allgemein mit dem Bezugszeichen 1 versehenen erfindungsgemäßen Beleuchtungssystems, wobei eine Kommunikation entsprechend dem DALI-Standard vorgesehen ist. Zentraler Bestandteil des Systems 1 ist eine Busleitung 2, der so genannte DALI-Bus, an welche die verschiedenen Teilnehmer des Systems 1 angeschlossen sind. Nicht dargestellt sind im vorliegenden Ausführungsbeispiel die Leitungen zur Stromversorgung der verschiedenen Teilnehmer des Systems 1, da die Art und Weise der Stromversorgung für das erfindungsgemäß Konzept keine Rolle spielt. Die dargestellten Leitungen dienen im vorliegenden Fall also ausschließlich der Kommunikation zwischen den verschiedenen Geräten.

Der DALI-Standard basiert auf dem sog. Master-Slave-Prinzip, d. h., eine Einheit des Systems 1 ist befugt, von sich aus Steuerbefehle auf die Busleitung 2 zu geben um die verschiedenen Teilnehmer zu kontaktieren und anzusteuern sowie eventuell Rückmeldungen abzufragen. Im vorliegenden Fall handelt es sich um einen sogenannten DALI-Controller 100, also eine zentrale Steuereinheit, welche Steuerbefehle auf die Busleitung 2 gibt. Diese werden dann an die verschiedenen Geräte, welche an die Busleitung 2 angeschlossen sind, übermittelt. Bei diesen Geräten kann es sich um unterschiedlichste Geräte handeln, sofern diese in der Lage sind, entsprechend dem DALI-Standard zu kommunizieren. Für den vorliegenden Fall wird davon ausgegangen, dass es sich bei diesen Geräten um elektronische Vorschaltgeräte bzw. allgemein um Betriebsgeräte zum Betreiben von Lichtquellen handelt. Diese Geräte sind also in Leuchten integriert und dazu ausgebildet, empfangene DALI-Befehle derart umzusetzen, dass die Lichtquellen in ihrer Helligkeit entsprechend eingestellt werden. Denkbar wäre darüber hinaus auch der Anschluss von Sensoren, über welche eine automatisierte Ansteuerung der Leuchten erfolgen kann. Es kann sich hierbei um Helligkeits- oder Anwesenheitssensoren handeln. Die von diesen Sensoren zur Verfügung gestellten Signale werden von der zentralen Steuereinheit 100 abgefragt und dann in entsprechende Befehle zur Ansteuerung der Betriebsgeräte umgesetzt.

Darauf hinzuweisen ist ferner, dass das erfindungsgemäße Beleuchtungssystem 1 selbstverständlich dahingehend erweitert werden könnte, dass die zentrale Steuereinheit 100 nochmals von einer übergeordneten Stelle aus Informationen zur Beleuchtungssteuerung erhält. Dargestellt ist dies in Fig. 1 schematisch durch eine weitere Einheit 200 , welche mit der Steuereinheit 100 kommuniziert. Hier ist es allerdings nicht erforderlich, dass die Kommunikation entsprechend dem DALI-Standard erfolgt. Stattdessen könnte jegliche Art der Kommunikation zwischen zwei intelligenten Geräten zum Einsatz kommen.

Im vorliegenden Fall sind die Verbraucher, also die Leuchten 20 bzw. deren Betriebsgeräte nicht unmittelbar mit dem DALI-Bus 2 verbunden. Stattdessen ist - wie erkennbar - eine erfindungsgemäße Splitter-Einheit 10 zwischengeschaltet. Im dargestellten Ausführungsbeispiel sind zwei Splitter-Einheiten 10 vorgesehen, welche unmittelbar an den DALI-Bus 2 angeschlossen sind und jeweils ausgangsseitig mit einer Gruppe von Verbrauchern 20 verbunden sind. Wie nachfolgend noch näher beschrieben wird, ergibt sich ein Vorteil insbesondere dann, wenn die an die Splitter-Einheiten 10 angeschlossenen Verbraucher gleichartig konfiguriert sind, was beispielsweise dann der Fall sein kann, wenn eine Splitter-Einheit mit den zugehörigen nachfolgenden Verbrauchern jeweils einem Raum zugeordnet ist und innerhalb eines Gebäudes mehrere gleichartige Räume existieren. Eine derartige Situation liegt beispielsweise in Hotels oder auch Krankenhäusern vor.

Für das vorliegende Ausführungsbeispiel wird also davon ausgegangen, dass sich die beiden dargestellten Splitter-Einheiten 10 jeweils in unterschiedlichen Räumen befinden, allerdings über den zentralen DALI-Bus 2 mit der zentralen Steuereinheit verbunden sind. Die Funktionsweise der Splitter-Einheiten 10 ist jedoch - abgesehen von dem DALI-Adressbereich, den sie belegen - identisch, weshalb nachfolgend die Ausgestaltung und Funktion der ersten bzw. in der Darstellung linken Splitter-Einheit 10 näher erläutert werden soll.

Wie erkennbar ist, weist also die Splitter-Einheit 10 zunächst einen eingangsseitigen Anschluss 11 auf, über den die Verbindung mit dem DALI-Bus 2 hergestellt wird. Die Splitter-Einheit 10 ist also in der Lage, über den DALI-Bus 2 zu kommunizieren und insbesondere DALI-Befehle zu empfangen bzw. Rückmeldungen entsprechend dem DALI-Standard an die Steuereinheit 100 zu übermitteln. Ausgangsseitig hingegen weist die Splitter-Einheit 10 mehrere - im dargestellten Ausführungsbeispiel zehn - Ausgangsanschlüsse 12 auf, an welche wiederum jeweils eine weitere Leitung 15 zur Befehlsübertragung angeschlossen ist, welche letztendlich zu den anzusteuernden Leuchten 20 führt. Auch über diese Leitungen 15 erfolgt die Kommunikation gemäß dem DALI-Standard, da die Leuchten 20 wie oben beschrieben DALI-Geräte darstellen. Das heißt, jeder ausgangsseitige Anschluss der Splitter-Einheit 10 ist wiederum mit einem nunmehr sehr kleinen DALI-Bus verbunden. Selbstverständlich kann die Anzahl der ausgangsseitigen Anschlüsse auch von der dargestellten Variante abweichen.

Eine Besonderheit besteht nunmehr dahingehend, dass über diese untergeordneten DALI-Busse, also die Leitungen 15, eine Kommunikation ausschließlich mit Hilfe von Broadcast-Befehlen erfolgen soll. Das heißt, den Leuchten 20, die ausgangsseitig an eine Splitter-Einheit 10 angeschlossen sind, muss keine individuelle Betriebsadresse zugewiesen werden und alle an einen bestimmten ausgangsseitigen Anschluss 12 angeschlossenen Leuchten 20 werden in gleichartiger Weise betrieben. Dabei müssen allerdings nicht zwangsläufig mehrere Leuchten mit einem einzelnen Ausgangsanschluss 12 verbunden sein. Es kann durchaus vorgesehen sein, dass lediglich eine einzelne Leuchte mit einem Ausgangsanschluss 12 verbunden ist. Auch in diesem Fall ergeben sich - wie nachfolgend noch näher beschrieben - Vorteile hinsichtlich des Aufwands bei der Inbetriebnahme des Systems 1.

Obwohl also alle Leuchten 20, die an Ausgänge der Splitter-Einheiten 10 angeschlossen sind, mit Hilfe von Broadcast-Befehlen angesteuert werden sollen, belegen diese Anschlüsse 12 trotz allem Adressen des DALI-Systems 1. Genaugenommen nimmt jede Splitter-Einheit 10 einen Adressbereich in Anspruch, der der Anzahl der ausgangsseitigen Anschlüsse 12 entspricht. Im dargestellten Ausführungsbeispiel, bei dem Splitter-Einheiten 10 jeweils zehn ausgangsseitige Anschlüsse 12 aufweisen, bedeutet dies also, dass jede Splitter-Einheit 10 zehn verschiedene DALI-Betriebsadressen in Anspruch nimmt, wobei im vorliegenden Fall davon ausgegangen wird, dass die DALI-Startadresse der ersten Splitter-Einheit 10 "10" beträgt, also die Adressen "10" bis "19" des DALI-Systems 1 genutzt werden, während hingegen die DALI-Startadresse der zweiten Splitter-Einheit 10 "20" beträgt und diese Einheit dementsprechend die Adressen "20" bis "29" belegt. Dabei wird z.B. die DALI-Adresse "10" dem ersten Ausgangsanschluss 12 der ersten Splitter-Einheit 10 zugeordnet, während hingegen eine DALI-Adresse "19" dem rechten bzw. letzten Ausgangsanschluss 12 dieser Splitter-Einheit 10 zugeordnet wird und die weiteren Adressen auf die dazwischenliegenden Anschlüsse 12 verteilt werden.

Die Funktionsweise der erfindungsgemäßen Splitter-Einheit 10 ist nunmehr derart, dass beim Eintreffen eines DALI-Befehls am eingangsseitigen Anschluss 11 durch eine interne Logik der Splitter-Einheit 10 festgestellt wird, ob die dem Befehl zugeordnete DALI-Adresse einem der ausgangsseitigen Anschlüsse 12 entspricht. Weist der eintreffende DALI-Befehl also eine Adressinformation auf, die einem der ausgangsseitigen Anschlüsse 12 zuzuordnen ist, so leitet die Splitter-Einheit 10 diesen DALI-Befehl erfindungsgemäß über den entsprechenden ausgangsseitigen Anschluss 12 weiter, ersetzt die Adressinformation nunmehr allerdings derart, dass es sich um einen Broadcast-Befehl handelt.

Das Umsetzen der Adressinformation bei Weiterleiten eines Befehls durch die Splitter-Einheit 10 ist schematisch in Figur 2 gezeigt. Der eigentliche Befehl bzw. Befehlsabschnitt bleibt also unverändert und es wird lediglich der die Adresse festlegende Bereich des Befehls dahingehend ersetzt, dass es sich nunmehr um einen Broadcast-Befehl handelt. Dies bedeutet, dass automatisch alle an den entsprechenden Anschluss 12 angeschlossenen Leuchten 20 diesen Befehl empfangen und in entsprechender Weise umsetzen, obwohl ihnen zuvor gar keine DALI-Betriebsadresse zugeordnet wurde.

Für den Fall, dass es sich bei dem eingangsseitig eintreffenden Befehl bereits um einen Broadcast-Befehl handelt, wird dieser durch die Splitter-Einheit 10 dann also an alle ausgangsseitigen Anschlüsse weitergeleitet. Das heißt, der Befehl erreicht tatsächlich alle Leuchten 20 des Systems 1, trotz der zwischengeschalteten Splitter-Einheit 10.

In analoger Weise erfolgt auch das Übermitteln von Rückmeldungen, welches entsprechend dem DALI-Standard für den Fall vorgesehen sein kann, dass eine Leuchte 20 eine Fehlinformation feststellt und diese der zentralen Steuereinheit mitteilen möchte. Auch in diesem Fall wird die Rückmeldung - wie in Figur 3 dargestellt - zunächst ohne spezifische Adressinformation (bzw. mi beliebiger Adresse) an die Splitter-Einheit 10 weitergeleitet. Die Splitter-Einheit 10 wiederum gibt die Rückmeldung dann über den eigentlichen DALI-Bus 2 an die zentrale Steuereinheit 100 aus, fügt dieser nunmehr allerdings die dem entsprechenden Ausgangsanschluss 12 zugeordnete Adressinformation hinzu. Aus Sicht der zentralen Steuereinheit 100 des Systems 1 ist also die Splitter-Einheit 10 vollkommen unsichtbar und es ergibt sich eine Kommunikation, wie sie auch bislang immer durchgeführt wurde. Insbesondere sind an der zentralen Steuereinheit 100 keine Modifikationen erforderlich, die das Nutzen der erfindungsgemäßen Splitter-Einheit 10 ermöglichen.

Die oben beschriebene Funktionsweise der Splitter-Einheit 10 verdeutlicht, dass die volle Funktionalität des DALI-Protokolls genutzt werden kann und nach wie vor Leuchten bzw. Gruppen von Leuchten in gewünschter Weise angesteuert werden können. Wesentlich ist allerdings, dass den Leuchten 20 keine Betriebsadressen mehr zugewiesen werden müssen sondern es lediglich erforderlich ist, die Leuchten 20 in geeigneter Weise mit den Ausgangsanschlüssen 12 der Splitter-Einheit 10 zu verbinden. Das Festlegen der Betriebsadressen für die Ausgangsanschlüsse 12 und damit für die angeschlossenen Leuchten 20 erfolgt dann lediglich dadurch, dass der Splitter-Einheit 10 eine entsprechende Startadresse zugeordnet wird. Dies kann beispielsweise auf elektronische Weise erfolgen, da die Splitter-Einheit 10 wie oben erläutert in klassischer Weise über den DALI-Bus 2 mit der zentralen Steuereinheit 100 kommunizieren kann. Vorzugsweise erfolgt jedoch unmittelbar an der Splitter-Einheit 10 selbst eine manuelle Einstellung der Startadresse, wobei hierfür dann entsprechende Schalter 13 oder dergleichen vorgesehen sein können.

Kommt dann beispielsweise das erfindungsgemäße System wie oben erwähnt in einem Hotel zum Einsatz, so können sämtliche Leuchten bzw. Verbraucher in allen Zimmer gleichartig mit der zugehörigen Splitter-Einheit verbunden werden und es ist abschließend lediglich erforderlich, den Splitter-Einheiten jeweils ihre Startadresse zuzuweisen. Weitere Maßnahmen sind hingegen nicht erforderlich, wodurch unmittelbar ersichtlich ist, dass sich hierbei ein deutlich geringerer Aufwand bei der Inbetriebnahme des Systems im Vergleich zu einer Zuordnung einzelner Betriebsadressen zu allen Leuchten ergibt. Dieser Vorteil ergibt sich auch für den Fall, dass an jeden Ausgangsanschluss einer Splittereinheit lediglich eine einzelne Leuchte oder ein einzelner Verbraucher angeschlossen wird, kommt allerdings selbstverständlich dann besonders zum Tragen, wenn an die ausgangsseitigen Anschlüsse eine Vielzahl von Leuchten angeschlossen werden.

Abschließend ist darauf hinzuweisen, dass an den zentralen DALI-Bus selbstverständlich nicht nur Splitter-Einheiten angeschlossen werden müssen sondern selbstverständlich auch hier einzelne Leuchten oder anderweitige Verbraucher bzw. Sensoren angeschlossen werden können. Wie bereits erwähnt ist für die zentrale Steuereinheit des Systems ohnehin nicht erkennbar, ob die Verbindung zu den Verbrauchern unmittelbar über den Bus oder über eine Splitter-Einheit erfolgt, was letztendlich bedeutet, dass bei der Nutzung der erfindungsgemäßen Splitter-Einheiten keinerlei Einschränkungen hinsichtlich der Funktionalität des DALI-Standards in Kauf genommen werden müssen.

## Patentansprüche

1. Splitter-Einheit (10) zur Verwendung in einem Beleuchtungssystem (1) **dadurch gekennzeichnet**, das die Splitter-Einheit (10) einen eingangsseitigen Anschluss (11) für die Verbindung mit einem DALI-Bus (2) sowie mindestens zwei ausgangsseitige Anschlüsse (12) aufweist,
wobei die Splitter-Einheit (10) dazu ausgebildet ist, über den eingangsseitigen Anschluss (11) empfangene DALI-Befehle abhängig von der dem empfangenen DALI-Befehl zugeordneten Adressinformation den ausgangsseitigen Anschlüssen (12) zuzuordnen und den entsprechenden DALI-Befehl als Broadcast-Befehl über den entsprechenden ausgangsseitigen Anschluss (12) auszugeben, wobei die Splitter-Einheit (10) dazu ausgebildet ist, jedem ausgangsseitigen Anschluss (12) jeweils eine DALI-Adresse zuzuordnen.

2. Splitter-Einheit nach Anspruch 1,
**dadurch gekennzeichnet,**
**dass** die Splitter-Einheit (10) dazu ausgebildet ist, an einem ausgangsseitigen Anschluss (12) eintreffende DALI-Rückmeldungen über den eingangsseitigen Anschluss (11) an den DALI-Bus (2) weiterzuleiten und hierbei weitergeleitete Rückmeldung mit der dem entsprechenden ausgangsseitigen Anschluss (12) zugeordneten DALI-Adresse zu versehen.

3. Splitter-Einheit nach einem der vorherigen Ansprüche,
**dadurch gekennzeichnet,**
**dass** die Splitter-Einheit (10) dazu ausgebildet ist, eingangsseitig eintreffende Broadcast-Befehle an allen ausgangsseitigen Anschlüssen (12) auszugeben.

4. Splitter-Einheit nach emem der vorherigen Ansprüche,
**dadurch gekennzeichnet,**
**dass** diese Mittel zum wahlweisen Festlegen der von der Splitter-Einheit (10) genutzten DALI-Adressen aufweist.

5. Splitter-Einheit nach Anspruch 4, ,
**dadurch gekennzeichnet,**
**dass** die Mittel ein manuelles Einstellen einer DALI-Start-Adresse ermöglichen.

6. Beleuchtungssystem (1) mit einer Vielzahl von anzusteuernden Geräten (20), welche dazu ausgebildet sind, entsprechend dem DALI-Standard zu kommunizieren, wobei das Beleuchtungssystem (1) einen DALI-Bus (2) aufweist, an den zumindest eine Splitter-Einheit (10) nach einem der vorherigen Ansprüche angeschlossen ist, und wobei zumindest ein Teil der anzusteuernden Geräte (20) an die ausgangsseitigen Anschlüsse (12) der Splitter-Einheit (10) angeschlossen ist.

7. Verfahren zum Betreiben von Geräten (20) in einem Beleuchtungssystem (1), welches einen DALI-Bus (2) aufweist, **dadurch gekennzeichnet, dass** die Geräte (20) dazu ausgebildet sind,
entsprechend dem DALI-Standard zu kommunizieren,
und wobei in einer an den DALI-Bus (2) angeschlossenen Splitter-Einheit (10) empfangene DALI-Befehle abhängig von der dem empfangenen DALI-Befehl zugeordneten Adressinformation einem ausgangsseitigen Anschluss (12) der Splitter-Einheit (10) zugeordnet werden und als Broadcast-Befehl über den entsprechenden ausgangsseitigen Anschluss (12) an die daran angeschlossenen Geräte (20) ausgegeben werden.

8. Verfahren nach Anspruch 7,
**dadurch gekennzeichnet,**
**dass** eingangsseitig an der Splitter-Einheit (10) eintreffende Broadcast-Befehle an allen ausgangsseitigen Anschlüssen (12) ausgegeben werden.

## Claims

1. Splitter unit (10) for use in a lighting system (1), **characterized in that** the splitter unit (10) has an input-side terminal (11) for connection to a DALI bus (2) and at least two output-side terminals (12),
wherein the splitter unit (10) is designed to assign DALI commands received via the input-side terminal (11) to the output-side terminals (12) depending upon the address information assigned to the received DALI command, and to output the corresponding DALI command as a broadcast command via the corresponding output-side terminal (12), wherein the splitter unit (10) is designed to respectively assign a DALI address to each output-side terminal (12).

2. Splitter unit according to claim 1,
**characterized in that**
the splitter unit (10) is designed to forward DALI feedback arriving at an output-side terminal (12) to the DALI bus (2) via the input-side terminal (11), and to provide thereby forwarded feedback with the DALI address assigned to the corresponding output-side terminal (12).

3. Splitter unit according to one of the preceding claims,
**characterized in that**
the splitter unit (10) is designed to output broadcast commands arriving on the input side to all output-side terminals (12).

4. Splitter unit according to one of the preceding claims,
**characterized in that**
it has means for selectively establishing the DALI addresses used by the splitter unit (10).

5. Splitter unit according to claim 4,
**characterized in that**
the means enable manually setting a DALI start address.

6. Lighting system (1) having a plurality of devices (20) to be controlled, which are designed to communicate according to the DALI standard, wherein the lighting system (1) has a DALI bus (2) to which is connected at least one splitter unit (10) according to one of the preceding claims, and wherein at least a portion of the devices (20) to be controlled is connected to the output-side terminals (12) of the splitter unit (10).

7. Method for operating devices (20) in a lighting system (1) which has a DALI bus (2), **characterized in that** the devices (20) are designed to communicate according to the DALI standard, and wherein DALI commands received in a splitter unit (10) connected to the DALI bus (2) are assigned to an output-side terminal (12) of the splitter unit (10) depending upon the address information assigned to the received DALI command, and are output as a broadcast command via the corresponding output-side terminal (12) to the devices (20) connected thereto.

8. Method according to claim 7,
**characterized in that**
broadcast commands arriving at the splitter unit (10) on the input side are output to all output-side terminals (12).

## Revendications

1. Unité de séparation (10) destinée à être utilisée dans un système d'éclairage (1) **caractérisée en ce que** l'unité de séparation (10) comporte une borne d'entrée (11) destinée à être reliée à un bus DALI (2) ainsi qu'au moins deux bornes de sortie (12),
dans laquelle l'unité de séparation (10) est conçue pour associer des instructions DALI reçues par le biais de la borne d'entrée (11) aux bornes de sortie (12) en fonction des informations d'adresse associées à l'instruction DALI reçue et délivrer l'instruction DALI correspondante en guise d'instruction de diffusion par le biais de la borne de sortie (12) correspondante, dans laquelle l'unité de séparation (10) est conçue pour associée une adresse DALI respectivement à chaque borne de sortie (12).

2. Unité de séparation selon la revendication 1,
**caractérisée en ce**
**que** l'unité de séparation (10) est conçue pour transmettre des réponses DALI arrivant à une borne de sortie (12) par l'intermédiaire de la borne d'entrée (11) au bus DALI (2) et ce faisant de doter la réponse transmise de l'adresse DALI associée à la borne de sortie (12) correspondante.

3. Unité de séparation selon l'une quelconque des revendications précédentes,
**caractérisée en ce**
**que** l'unité de séparation (10) est conçue pour délivrer des instructions de diffusion arrivant côté entrée à toutes les bornes de sortie (12).

4. Unité de séparation selon l'une quelconque des revendications précédentes,
**caractérisée en ce**
**que** celle-ci comporte des moyens pour définir sélectivement les adresses DALI utilisées par l'unité de séparation (10).

5. Unité de séparation selon la revendication 4,
**caractérisée en ce**
**que** les moyens permettent un réglage manuel de l'adresse de départ DALI.

6. Système d'éclairage (1) comprenant une pluralité d'appareils à commander (20), qui sont conçus pour communiquer conformément à la norme DALI, dans lequel le système d'éclairage (1) comporte un bus DALI (2), auquel au moins une unité de séparation (10) selon l'une quelconque des revendications précédentes est connectée et dans lequel au moins une partie des appareils à commander (20) est connectée aux bornes de sortie (12) de l'unité de séparation (10).

7. Procédé pour faire fonctionner des appareils (20) dans un système d'éclairage (1), lequel comporte un bus DALI (2), **caractérisé en ce que** les appareils (20) sont conçus pour communiquer conformément à la norme DALI et dans lequel des instructions DALI reçues dans une unité de séparation (10) connectée au bus DALI (2) sont associées, en fonction des informations d'adresse associées à l'instruction DALI reçue, à une borne de sortie (12) de l'unité de séparation (10) et délivrées en guise d'instruction de diffusion par l'intermédiaire de la borne de sortie (12) correspondante aux appareils (20) qui lui sont connectés.

8. Procédé selon la revendication 7,
**caractérisé en ce**
**que** des instructions de diffusion arrivant côté entrée à l'unité de séparation (10) sont délivrées à toutes les bornes de sortie (12).
